# EUROPEAN PATENT SPECIFICATION

(11) **EP 3 789 223 B1**
(45) Date of publication and mention of the grant of the patent: **17.01.2024**
(21) Application number: 20194331.3
(22) Date of filing: 03.09.2020
(51) Int. Cl.: B60K 1/00, B60K 1/02, B60K 7/00, F16H 3/54, F16H 3/089

(54) **ELECTRIC MODULAR TRACTION SYSTEM**
ELEKTRISCHES TRAKTIONSSYSTEM MIT MODULAREM AUFBAU
SYSTÈME DE TRACTION MODULAIRE ÉLECTRIQUE

(30) Priority: 03.09.2019 IT 201900015422
(43) Date of publication of application: 10.03.2021
(73) Proprietor: Iveco S.p.A., 10156 Torino (IT)
(72) Inventor: PEREIRA DE LEMOS, José Francivaldo, SETE LAGOAS MG (BR); BERNARDINI, Alessandro, 16123 GENOVA (IT); MANTOVANI, Giorgio, 16148 GENOVA (IT)
(74) Representative: Studio Torta S.p.A.

(56) References cited:
- EP-A1- 3 284 972
- CN-A- 108 561 525
- DE-A1-102012 110 269
- US-A- 1 965 266
- US-A1- 2019 077 247
- US-A1- 2019 111 778

## Description

### TECHNICAL FIELD

The invention relates to a traction system for vehicles, in particular to an electric modular traction system for commercial vehicles.

### KNOWN STATE OF THE ART

Commercial vehicles can be provided with internal combustion engine traction systems, which are usually connected to a drivetrain system connecting an output of the internal combustion engine to one or more driving axles.

This arrangement, which is common in internal combustion engines, becomes obsolete and scarcely suited for more modern electric drive vehicles.

Indeed, compact and versatile electric traction assemblies are increasingly needed, so as to free the space that was previously occupied by the drivetrain in order to house said electric traction assemblies and the batteries needed to supply them with power.

Examples of known traction systems are disclosed in published documents DE 10 2012 110269 A1,
EP3284972 A1, US2019/077247 A1, CN108561525 A, US1965266 A or US2019/111778 A1.

Therefore, a traction system is needed, which is as versatile as possible and can be used in different vehicles with different types of axles.

The object of the invention is to fulfil the needs discussed above.

### SUMMARY OF THE INVENTION

The aforesaid object is reached by an electric modular traction module and by an axle comprising said system according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 shows a schematic and partially sectional view, with parts removed for greater clarity, of an electric traction module according to a first embodiment of an electric traction unit not making part of the invention but useful to its understanding;
- Figures 2, 3 and 4 show respective schematic and partially sectional views, with parts removed for greater clarity, of a first, a second and third embodiment which are alternative to the first embodiment of figure 1;
- Figure 5 shows a schematic and partially sectional view, with parts removed for greater clarity, of an electric traction module according to a second embodiment of an electric traction unit not making part of the invention but useful to its understanding;
- Figure 6 shows a schematic and partially sectional view, with parts removed for greater clarity, of an embodiment which is alternative to the second embodiment of figure 5;
- Figure 7 shows a schematic and partially sectional view, with parts removed for greater clarity, of an electric traction module according to a third embodiment of an electric traction unit not making part of the invention but useful to its understanding;
- Figure 8 shows a schematic and partially sectional views, with parts removed for greater clarity, of a first alternative embodiment, according to the invention, to the third embodiment of figure 7
- Figures9 and 10 show respective schematic and partially sectional views, with parts removed for greater clarity, of a second and third embodiment, which are alternative to the third embodiment of figure 7;
- Figure 11 shows a schematic and partially sectional view, with parts removed for greater clarity, of an electric traction module according to a fourth embodiment of an electric traction unit not making part of the invention but useful to its understanding;
- Figure 12 shows a schematic and partially sectional view, with parts removed for greater clarity, of an embodiment which is alternative to the fourth embodiment of figure 11;
- Figure 13 shows a schematic and partially sectional view, with parts removed for greater clarity, of an electric traction module according to the invention;
- Figure 14 shows a schematic and partially sectional view, with parts removed for greater clarity, of an embodiment which is alternative to the fifth embodiment of figure 13.

### DETAILED DESCRIPTION OF THE INVENTION

According to the invention, an electric traction module 1 is provided, which basically comprises at least one electric motor 2 and a mechanical transmission system 3, which is configured to transmit the mechanical torque produced by said at least one electric motor 2 to a pair of axle shafts 4, 5 of a vehicle (not shown), which are each configured to carry, at an end of theirs, a wheel, as it is known.

Said at least one electric motor 2 and the mechanical transmission system 3 are both advantageously housed inside a framework 8, which is configured to delimit and internal volume 9 suited for the purpose. The framework 8 is also configured to delimit two openings, which are designed to allow the axle shafts 4,5 to go through it.

Said at least one electric motor 2 is further connected, in an electromagnetic manner, for example through wire connection or through electromagnetic signals, to a control unit of the vehicle, for example the ECU, which is configured to control the operation thereof or, in case there are different electric motors 2, the operation thereof in a coordinated manner.

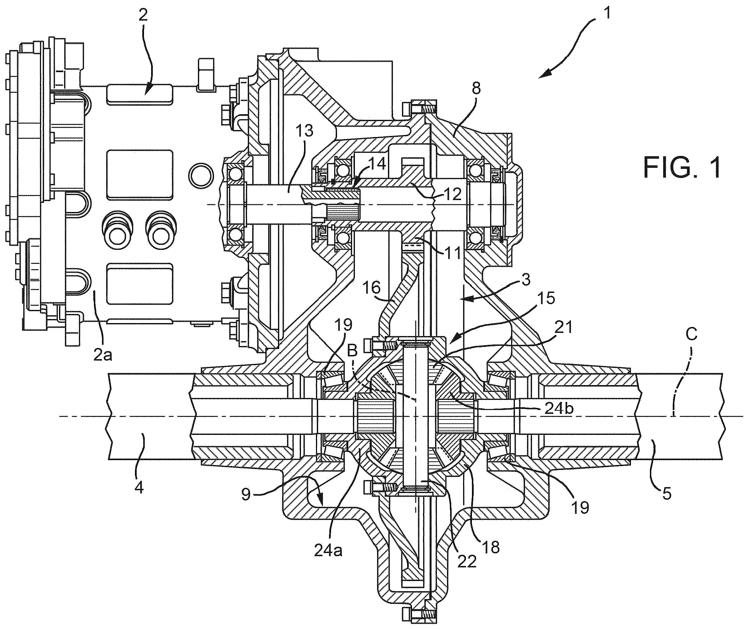

In the first embodiment, which is shown in figure 1, the electric traction module 1 comprises one single electric motor 2a, which is housed inside the internal volume 9 defined by the framework 8 and is connected, by means of the mechanical transmission system 3, to a left axle shaft 4 and to a right axle shaft 5, which are configured to carry respective wheels, as mentioned above.

The transmission system 3, in this case described, comprises a first cogged wheel 11, which is rigidly carried by an intermediate shaft 12, which, in turn, is connected to an output shaft 13 of the electric motor 2a by means of a reversible mechanical connection, for example a spline connection 14. Advantageously, the output shaft 13 of the motor 2a, the cogged wheel 11 and the shaft 12 are all coaxial to a common axis A.

The transmission 3 further comprises a differential 15 cooperating with the cogged wheel 11 by means of a cogged wheel 16, as described below.

The differential 15 is known and comprises a gear train-holder 18, which is carried by the framework 8 so as to freely rotate, for example by means of ball bearings 19. According to the described embodiment, the gear train-holder 18 is rigidly connected to the cogged wheel 16 by means of known threaded elements. In particular, the cogged wheel 16 extends in a direction perpendicular to the aforesaid axis A from an outer surface of the gear train-holder 18.

As it is further known, the gear train-holder 18 carries a plurality of planet gears 21, for example four planet gears, which are angularly equally spaced apart from one another by 90° and are supported by a cross-shaped support 22, which is rigidly carried by the gear train-holder 18 and around whose arms the planet gears 21 can rotate. In particular, the planet gears rotate on the support 22 around axes contained in a plane B, which is perpendicular to the axis A.

The planet gears 14 cooperate with a respective driven gear respectively comprising a left bevel gear 24a and a right bevel gear 24b, which are rigidly carried by the axle shaft 5 and by the axle shaft 6, respectively, which preferably are coaxial to one another along an axis C, which is parallel to the axis A.

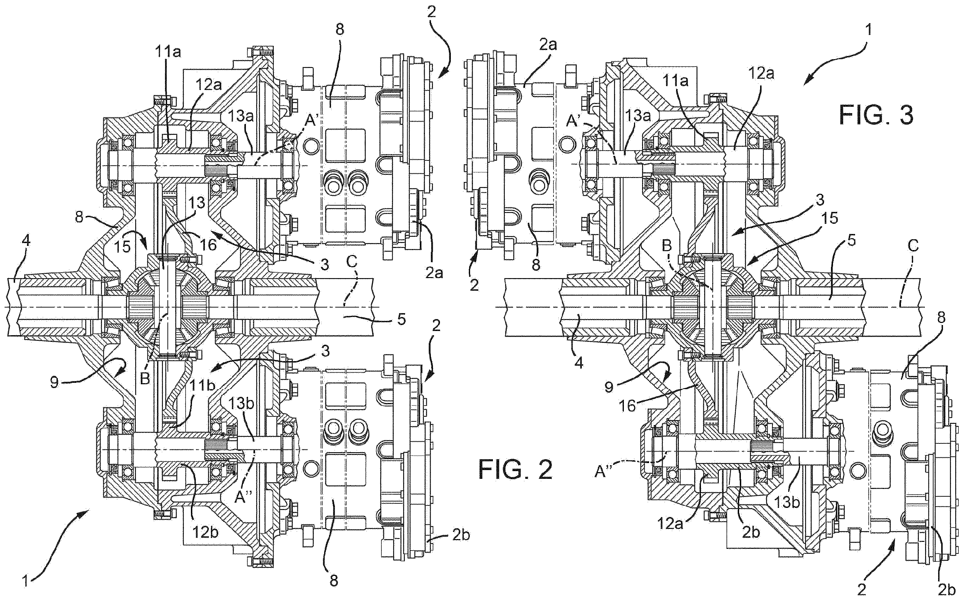

In the embodiment alternative to the first embodiment, which is shown in figure 2, the electric traction module 1 comprises a first electric motor 2a and a second electric motor 2b, which are housed inside the volume 9 defined by the framework 8 and are connected to the cogged wheel 16 of the differential 15, as described above, by means of a mechanical transmission 3.

In particular, for each motor 2a, 2b, the mechanical transmission 3 comprises a cogged wheel 11a, 11b, which is rigidly carried by an intermediate shaft 12a, 12b, which, in turn, is connected to an output shaft 13a, 13b of the respective electric motor 2a, 2b by means of a reversible mechanical connection of the type already described.

Advantageously, the output shaft of the motor 2a, 2b, the respective cogged wheel 11a, 11b and the shaft 12a, 12b are coaxial to output axes A', A" of the respective electric motor 2a, 2b. More preferably, said axes are parallel to one another and perpendicular to the axis B of the planet gears 21 of the differential 15.

In the described embodiment, the electric motors 2a, 2b are arranged on opposite sides relative to the axis C, but on the same side relative to the plane B defined by the planet gears 21.

In an embodiment alternative to the first embodiment, which is shown in figure 3, the components of the electric traction module 1 are the same as the ones of figure 2, the only difference lies in the position of the electric motors 2a, 2b (and, consequently, of the relative mechanical chain). Indeed, in said embodiment, the electric motors 2a, 2b are arranged on opposite sides both relative to the axis C and relative to the plane B.

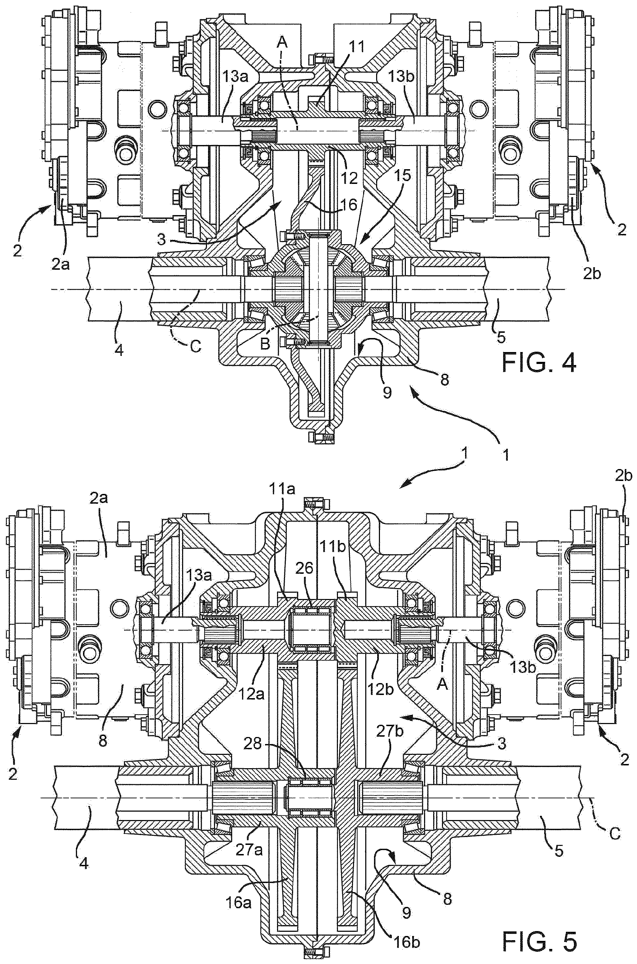

In the embodiment alternative to the first embodiment, which is shown in figure 4, the electric traction module 1 comprises a first electric motor 2a and a second electric motor 2b, which are housed inside the volume 9 defined by the framework 8 and are connected to the cogged wheel 16 of the differential 15, as described above, by means of a mechanical transmission 3.

However, in this case, the mechanical transmission 3 comprises one single cogged wheel 11, which is rigidly carried by an intermediate shaft 12, which, in turn, is connected, at the ends, to a respective output shaft 13a, 13b of the electric motor 2a, 2b by means of a reversible mechanical connection of the type described above.

Advantageously, the output shaft 13a, 13b of the motor 2a, 2b, the cogged wheel 11 and the shaft 12 are coaxial to one single axis A, which is parallel to the axis B of the output axle shafts 4, 5 of the respective electric motor 2a, 2b.

The first embodiment described above works as follows.

Through the control operated by the electric control unit, in the case of the figure 1, the electric motor 2a is controlled so as to deliver a torque to/cause the rotation, at a predetermined velocity, of the intermediate shaft 12, which, thanks to the meshing between the cogged wheel 11, which is carried by the latter, and the cogged wheel 16, which is carried by the gear train-holder 18, allows the latter to rotate. As a consequence, the torque/velocity of the gear train-holder 18 is divided between the two axle shafts 4,5 thanks to the different elements of the differential 15, in a known manner.

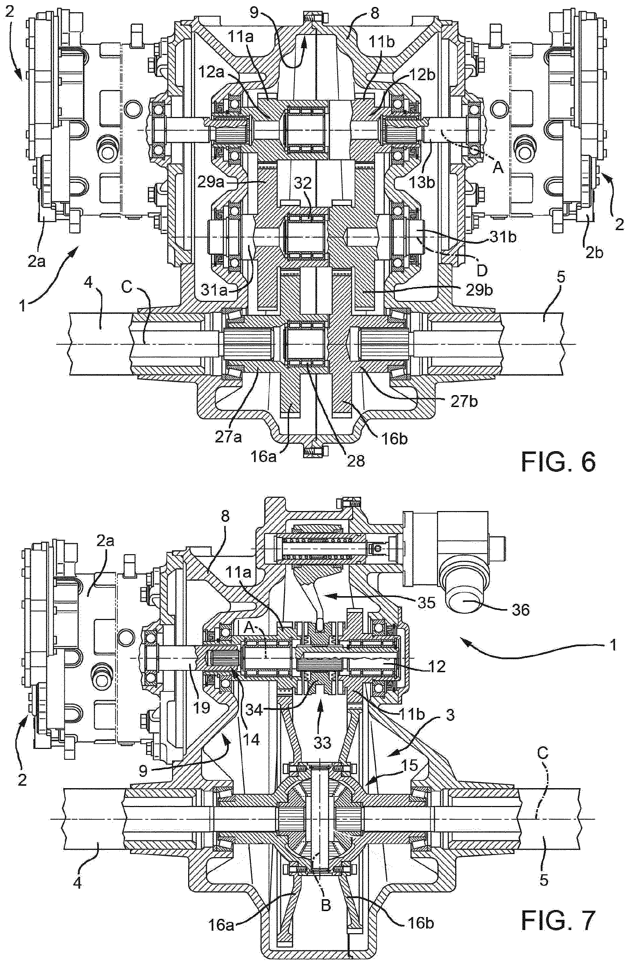

In a second embodiment, which is shown in figures 5 and 6, the electric traction module 1 comprises a first electric motor 2a and a second electric motor 2b, which are housed inside the volume 9 defined by the framework 8 and are each connected to a cogged wheel 11a, 11b, which is carried by a respective intermediate shaft 12a, 12b, as described above, which is connected to a respective output shaft 13a, 13b of the relative electric motor 2a, 2b.

In particular, the intermediate shaft 12a of the first electric motor 2a is supported so as to freely rotate on the intermediate shaft 12b of the second electric motor 2b by means, for example, of a bushing 26. Accordingly, the first and the second electric motors 2a, 2b, the intermediate shafts 12a, 12b and the cogged wheels 11a, 11b are all coaxial to an axis A, which is parallel to an axis C of the axle shafts 4, 5.

In this case, the mechanical transmission 3 between electric motors 2a, 2b and axle shafts 4, 5 comprises one single cogged wheel 16a, 16b, which is carried by a respective support shaft 27a, 27b. The latter are connected to the relative axle shaft 4, 5 by means of a respective reversible mechanical connection, for example a spline connection.

Similarly to the shafts 12a, 12b, the support shaft 27a is supported so as to freely rotate on the support shaft 27b by means of a bushing 28. Accordingly, the support shafts 27a, 27b and the cogged wheels 16a, 16b are all coaxial to the axis C of the axle shafts 4,5.

In the embodiment alternative to the second embodiment, which is shown in figure 6, unlike in the embodiment of figure 5 already described above, the mechanical transmission 3 further comprises a first and a second intermediate cogged wheels 29a, 29b, which connect the cogged wheel 11a, 11b carried by the relative electric motor 2a, 2b, respectively, to the cogged wheels 16a, 16b.

In particular, each intermediate cogged wheel 29a, 29b is carried by an intermediate support shaft 31a, 31b, which is carried by the framework 8 so that it can freely rotate, for example by means of rolling supports. Similarly to the shafts 12a, 12b, the intermediate support shaft 31 a is supported so as to freely rotate on the intermediate support shaft 31b by means of a bushing 32. Accordingly, the support shafts 31a, 31b and the cogged wheels 29a, 29b are all coaxial to an axis D, which is parallel to the aforesaid axes A and C.

The second embodiment described above works as follows.

The control unit, in this case, is further configured to receive signals from the steering wheel of the vehicle and to accordingly control the first and the second electric motors 2a, 2b at different velocities so that the velocity delivered to the left axle shaft 4 is different from the one delivered to the right axle shaft 5, when and to the extent deemed necessary for the steering thereof.

In the module 1 of figure 5, the torque delivered by the electric motors 2a, 2b to the shafts 12a, 12b through the meshing of the cogged wheels 11a, 11b with the respective wheels 16a, 16b is directly transmitted to the axle shafts 4,5.

The intermediate shafts 12a, 12b and the support shafts 27a, 27b of the cogged wheels 16a, 16b are free to rotate relative to one another thanks to the bushings 26, 28.

In the module 1 of figure 6, the mode of operation is the same, except for the fact that the torque goes through two stages between the cogged wheels 11a, 11b and 16a, 16b thanks to the intermediate cogged wheels 29a, 29b.

In a third embodiment, which is shown in figures 7, 8, 9 and 10, the electric traction module 1 comprises one single electric motor 2, which is housed inside the volume 9 defined by the framework 8 and is connected to the axle shafts 4 and 5 by means of a mechanical transmission system 3, for example comprising a differential 15 of the type described above.

In the described embodiment, the mechanical transmission 3 further comprises torque/velocity selector means 33, which are configured to change the torque/velocity delivered by the electric motor 2 relative to the one transmitted to the axle shafts 4, 5 by means of the rest of the mechanical transmission 3.

In the embodiment of figures 7 to 10, the torque/velocity selector means 33 comprise a a gearbox with two gears, preferably with cogged wheels that can be selected by means of a selector gear, as described below.

According to figure 7, the output shaft 13 of the electric motor 2 is connected, in a mechanically reversible manner, for example - as mentioned above - by means of a spline connection 14, to an intermediate shaft 12. The latter carries a first cogged wheel 11a and a second cogged wheel 11b, having a different size/number of teeth, so that they can freely rotate.

The intermediate shaft 12, the cogged wheels 11a, 11b and the output shaft 13 of the motor 2 are coaxial to one another around the axis A. The intermediate shaft 12 is further configured to carry, integral to its rotation, a selector gear 34, which is free to slide on the axis A and is configured to selectively cooperate with one of the cogged wheels 11a, 11b so as to cause them to be integral to the rotation of the intermediate shaft 12. Said selector gear 34 advantageously is a known coupling, which can slide on a spline profile and is configured to cooperate, with suitable projections, with the cogged wheels 11a, 11b.

The selector gear 34 is moved along the axis A by means of known actuator means 35, for example a mechanical actuator comprising a lever 36, which can be operated thanks to a manual command or to an electronic signal automatically transmitted by the electronic control unit, which is also configured to control the electric motors 2a, 2b.

Each one of the cogged wheels 11a, 11b meshes with a respective cogged wheel 16a, 16b, which is carried by the gear train-holder 18 of the differential 15, which, as mentioned above, is connected to the axle shafts 4 and 5.

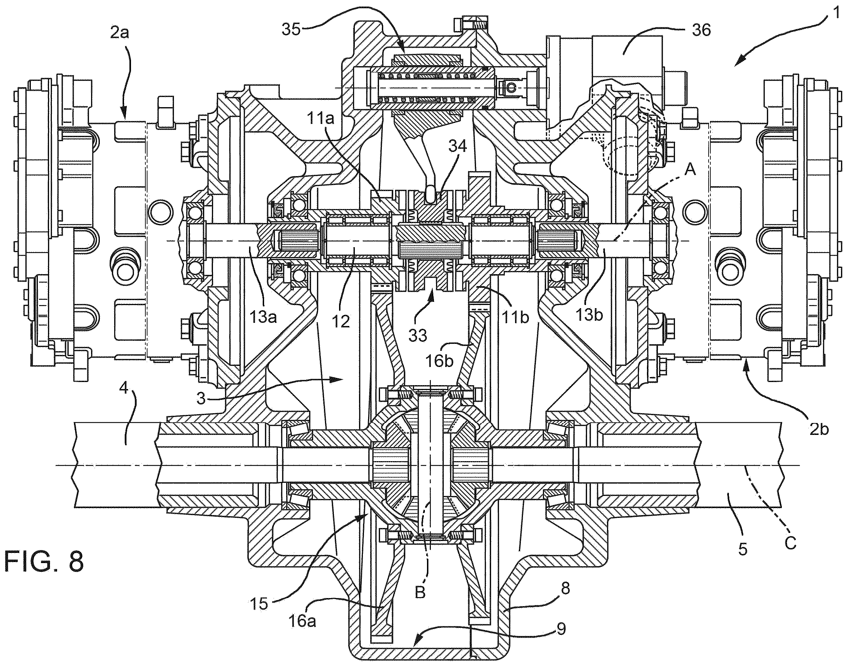

In an embodiment alternative to the third embodiment, realized according to the invention,, which is shown in figure 8, the module 1 comprises a first and a second electric motor 2a, 2b, which are both connected, on opposite ends and by means of the respective output shaft 13a, 13b, to the intermediate shaft 12, which carries the two cogged wheels 11a, 11b.

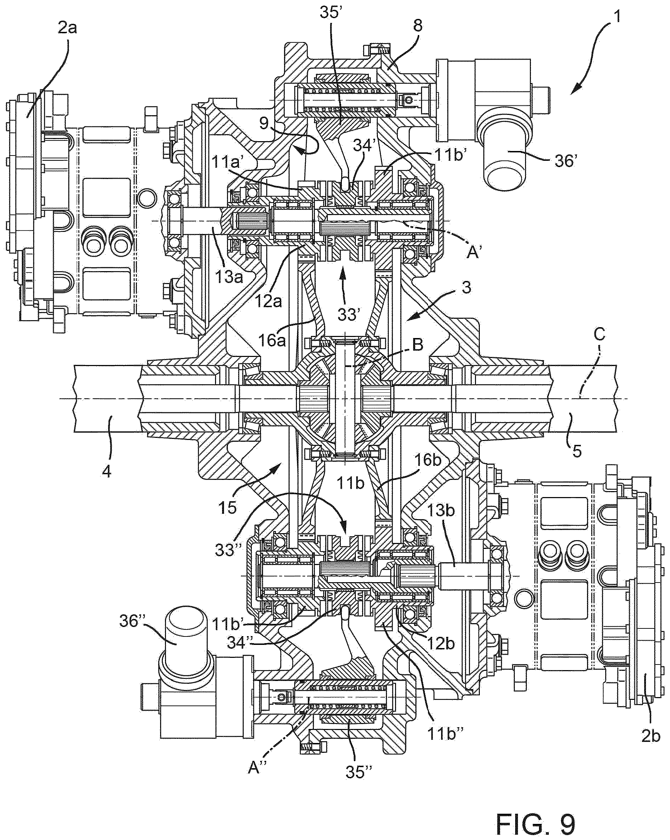

In an embodiment alternative to the third embodiment, which is shown in figure 9, the module 1 comprises a first and a second electric motor 2a, 2b, which are arranged on opposite sides of the axis C defined by the axle shafts 4 and 5 and on opposite sides of the plane B defined by the plane gears 21 of the differential 15.

Consequently, each one of the first and second electric motors 2a, 2b is connected, in a mechanically reversible manner, for example - as already mentioned above - by means of a spline connection, to an intermediate shaft 12a, 12b. The latter carries a first cogged wheel 11a', 11a" and a second cogged wheel 11b', 11b", having a different size/number of teeth, so that they can freely rotate. Each intermediate shaft 12a, 12b, the relative cogged wheels 11a', 11a', 11b', 11b" and the output shafts 13a, 13b are coaxial to one another around respective axes A', A", which are parallel to one another and to the axis C.

Each intermediate shaft 12a, 12b is configured to carry a selector gear 34', 34" of the aforesaid type, which is free to slide on the respective axis A' A" and is configured to selectively cooperate with one of the cogged wheels 11a', 11a", 11b', 11b' in order to cause them to be integral to the rotation of the relative intermediate shaft 12a, 12b. Said selector gear 34', 34" advantageously is a known coupling, which can slide on a spline profile and is configured to cooperate, with suitable projections, with the cogged wheels 11a', 11a", 11b', 11b'.

Each selector gear 34', 34" is moved along the respective axis A', A" by means of known actuator means 35', 35", for example a mechanical actuator comprising a manually operated lever 36', 36".

Each one of the cogged wheels 11a', 11a", 11b', 11b' meshes with a respective cogged wheel 16a, 16b, which is carried by the gear train-holder 18 of the differential 15, which, as mentioned above, is connected to the axle shafts 4 and 5.

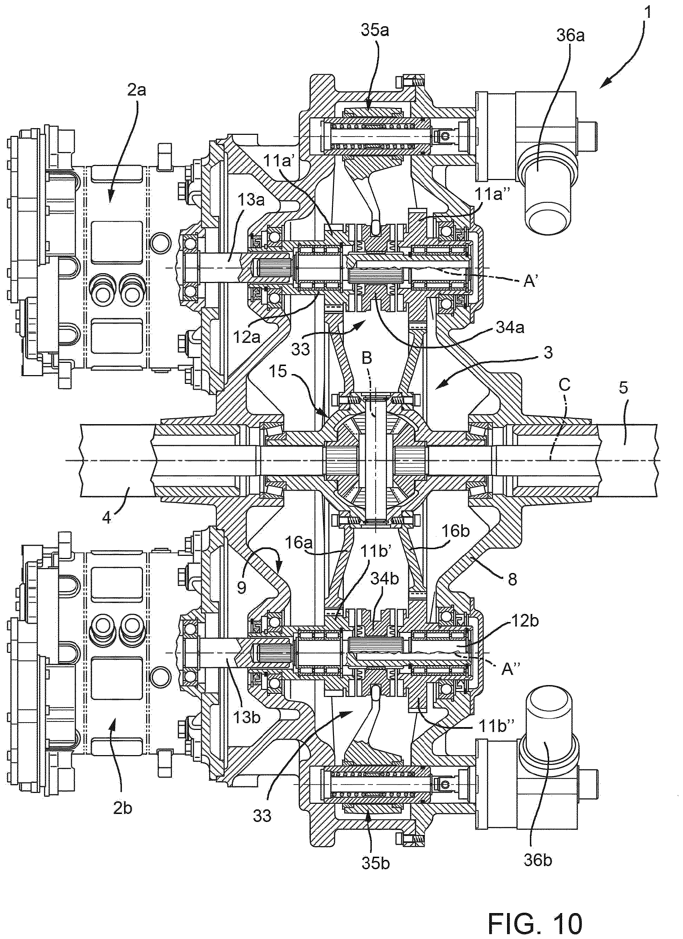

An embodiment alternative to the third embodiment, which is shown in figure 10, is identical to one of figure 9, except for the fact the electric motors are arranged on opposite sides relative to one another with respect to the axis C, but on the same side with respect to the plane B. As a consequence, this embodiment will not be described for the sake of brevity.

The third embodiment described above works as follows.

Like in the previous embodiments, one or more electric motors 2 are controlled by the electronic control unit so as to deliver a torque to/cause a rotation of the differential 15, which divides it between the axle shafts 4,5 in a known manner.

In the embodiment of figure 7, the rotation delivered to the intermediate shaft 12 can be transmitted either through the meshing between the firth cogged wheel 11a and the cogged wheel 16a or through the meshing between the second cogged wheel 11b and the second cogged wheel 16b. Precisely, users can electronically select the desired speed, namely the desired gear, by means of the selector means 33, in this case by operating the lever 36, which moves the selector 34 along the shaft 12 in order to couple the latter to one of the cogged wheels 11a, 11b. Hence, depending on the selected gear, users can shift between two different speeds, namely gears, between the torque/velocity provided by the motor 2 and the one delivered to the differential 15.

According to the embodiment of figure 8, the mode of operation is the same; however, since there are two motors 2a, 2b acting upon the same shaft, the electronic unit has to control them so that they act in a synchronous manner, namely with the same velocity, upon the shaft 12.

According to the embodiment of figures 9 and 10, the mode of operation is the same; however, since there are two motors 2a, 2b acting upon the differential 15 through the meshing between the wheels 11a, 11b and 16a, 16b, the electronic unit has to control said motors 2a, 2b so that they act in a synchronous manner, namely with the same velocity, upon the differential 15. When needed, the electronic unit has to control the synchronous activation of the selector means on the same gear.

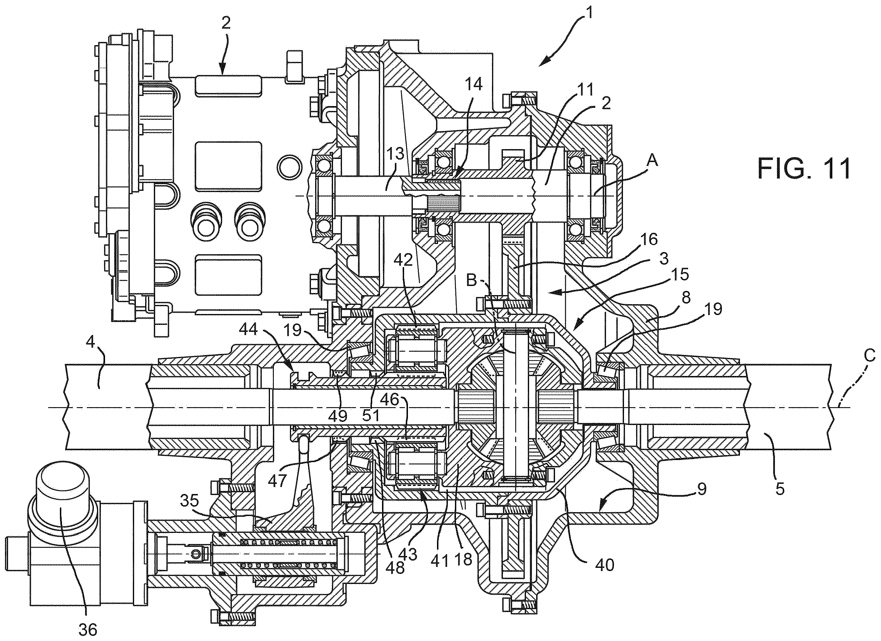

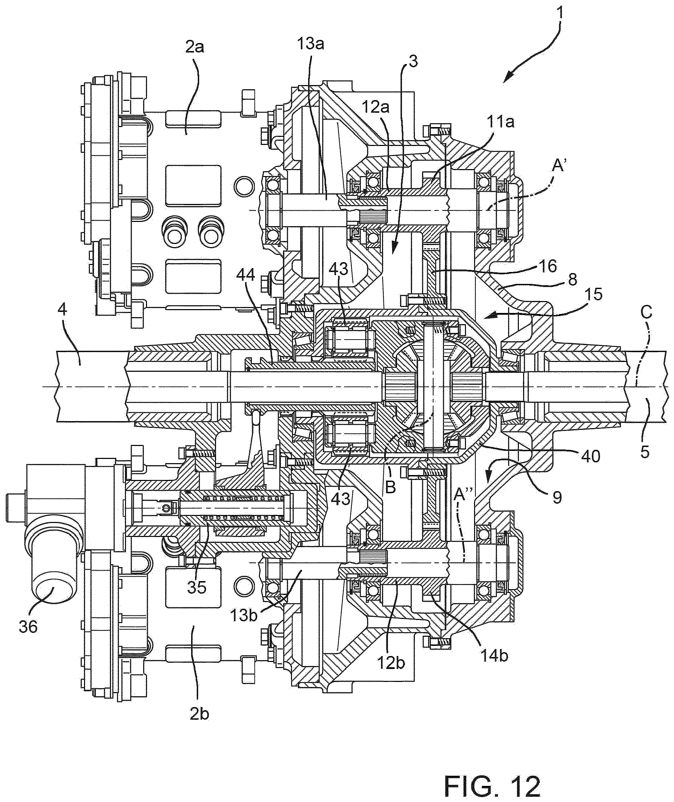

In a fourth embodiment, which is shown in figures 11 and 12, the electric traction module 1 comprises one single electric motor 2, which is housed inside the volume 9 defined by the framework 8 and is connected to the axle shafts 4 and 5 by means of a mechanical transmission system 3, for example comprising a differential 15 of the type described above.

However, in this embodiment, the torque/velocity selector means 33, which are configured to change the torque/velocity delivered by the electric motor 2 relative to the one transmitted to the axle shafts 4, 5 through the rest of the mechanical transmission 3, comprise a gearbox with two gears, preferably with a planetary gear of the type described below.

In particular, the differential 15 is housed inside a volume 41 defined by a rotating structure 40, which is supported by the framework 8 and by the axle shafts 4,5 so that it can freely rotate, for example by means of rolling bearings 19.

Said rotating structure 40 defines, in an end portion that is not occupied by the differential 15, a toothing 42, which is configured to cooperate with a plurality of planet gears 43 rotating around the axis C thanks to the support of a selector shaft 44, which is coaxial to the axle shaft 4, and carried by the gear train-holder 18 of the differential 15. The rotating structure 40 is further configured to carry, in an integral manner, a cogged wheel 16, which is configured to cooperate, by meshing, with the cogged wheel 11 carried by the motor 2.

Consequently, the selector shaft 44 comprises a cogged portion 46, which is configured to cooperate, by meshing, with the planet gears 43. The selector shaft 44 preferably extends, on the opposite side relative to the differential 15, out of the framework 8 and is configured to cooperate with known actuator means 35, for example a mechanical actuator comprising a manually operated lever 36, which are configured to move it along the axis C.

The selector shaft 44 further defines a first and a second toothing 47, 48 extending outwards from the outer wall of the selector shaft away from the axis C. Said first and second toothings are configured to cooperate with respective toothings 49, 51, which are respectively obtained in an opening defined by the framework 8 in order to permit the passage of the selector shaft 44 and in an opening defined by the rotating structure 40 and serving the same purpose.

Consequently, the selector shaft 44 can assume a first operating position, in which it is integral to the framework 8 and, hence, is fixed and the torque/velocity getting in from the cogged wheel 16 is transmitted, through the planet gears 43, to the gear train-holder 18 with a velocity that is different from the input velocity, and a second operating position, in which it is integral to the rotating structure 40 and, hence, rotates with it and the torque/velocity getting in from the cogged wheel 16 is transmitted to the gear train-holder 18, through the planet gears 43, at the same velocity.

In an embodiment alternative to the fourth embodiment, which is shown in figure 12, the electric traction module 1 comprises a first and a second electric motor 2a, 2b, which are housed inside the volume 9 defined by the framework 8 and are each connected to the axle shafts 4 and 5 by means of a mechanical transmission system 3, for example comprising a differential 15 of the type described above.

In particular, the electric motors 2a, 2b are arranged on the same side relative to the plane B defined by the planet gears 21 of the differential 15, but on opposite sides of the axis C defined by the axle shafts 4,5. Consequently, similarly to other embodiments described above, the output shaft of the motor 2a, 2b, the respective cogged wheel 11a, 11b and the shaft 12a, 12b are coaxial to output axes A', A" of the respective electric motor 2a, 2b. Said axes are parallel to one another and perpendicular to the axis B of the planet gears 21 of the differential 15.

Like in the embodiment of figure 11, the torque/velocity selector means 33 comprise a gearbox with a planetary gear of the type described below, which is interposed between each motor 2a, 2b and the differential 15, upon which they act in parallel.

Indeed, the structure of the planetary gear gearbox is the same and, for the sake of brevity, will not be repeated. The difference from the embodiment of figure 11 lies in the fact that the cogged wheels 11a, 11b carried by the respective motor 2a, 2b act upon the cogged wheel 16 carried by the rotating structure 40 in parallel.

The fourth embodiment described above works as follows.

With reference to the embodiment of figure 11, the electric motor 2, based on the control operated by the electronic control unit of the vehicle, transmits a torque/velocity to the shaft 12, which, through the meshing of the cogged wheels 11 and 16, transmits it to the rotating structure 40, which houses the differential 15.

According to a first position of the selector shaft 44, which can manually or electrically be selected by means of the actuator means 35 and in which the selector shaft 44 is integral to the framework 8, the torque/velocity of the rotating structure 40 is transmitted to the planet gears 43, which, in turn, by rotating on the selector shaft 44, transmit it to the gear train-holder 18 of the differential 15, which divides it between the axle shafts 4,5 in a known manner.

According to a second position of the selector shaft 44, which -again - can manually or electrically be selected by means of the actuator means 35 and in which the selector shaft 44 is integral to the rotating structure 40, the torque/velocity is transmitted from the rotating structure 40 to the planet gears 43, which, in turn, by rotating on the selector shaft 44, which has the same velocity as the rotating structure 40, transmit the same velocity thereof to the gear train-holder 18 of the differential 15, which divides it between the axle shafts 4,5 in a known manner.

Therefore, there can be two gears, namely two different torque/velocity ratios between the engine 2 and the axle shafts 4,5; a first ratio, in which the velocity transmitted is the same, and a second ratio, in which the velocity is changed depending on the gear ratio of the planetary gear.

The mode of operation of the module 1 of figure 12 is the same as the one described above, the only difference lying in the fact that the velocity is transmitted to the rotating structure 40 through the two electric motors 2a, 2b acting upon the same cogged wheel 16 through the two cogged wheels 11a, 11b.

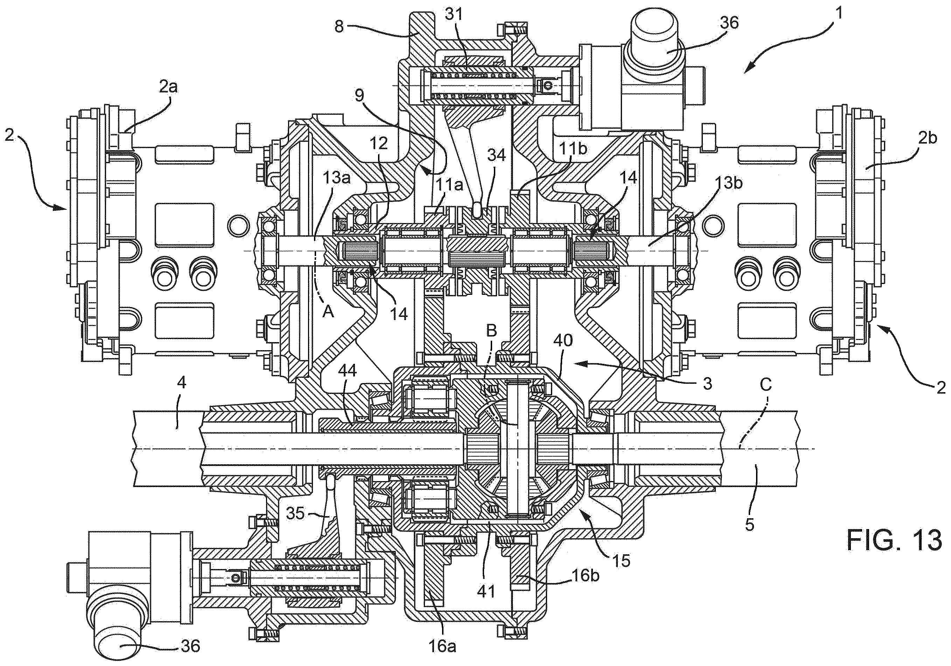

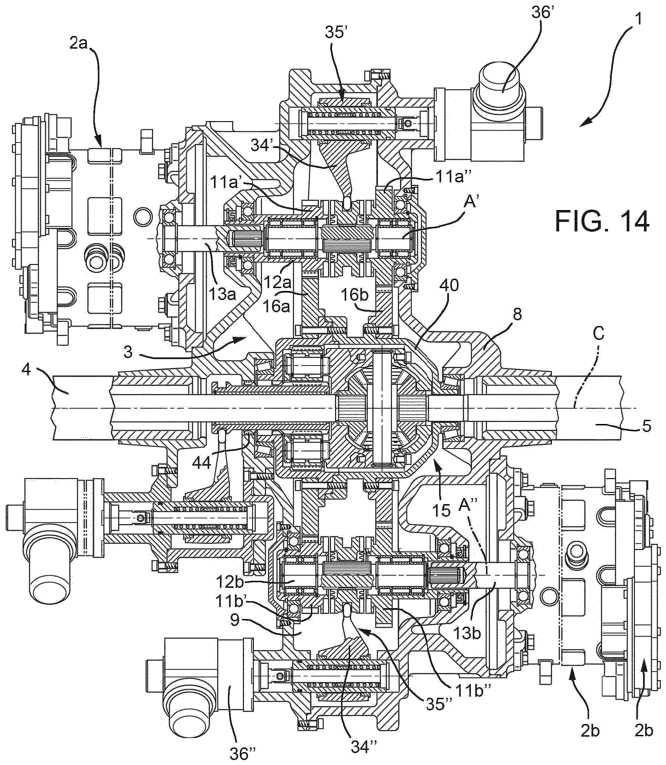

In a fifth embodiment realized according to the invention,, which is shown in figures 13 and 14, the electric traction module 1 comprises a first and a second electric motor 2a, 2b, which are both connected, on opposite ends and by means of the respective output shaft 13a, 13b, to the intermediate shaft 12, which carries two cogged wheels 11a, 11b. Consequently, the intermediate shaft 12, the output shafts 13a, 13b and the cogged wheels 11a, 11b are coaxial to one another along an axis A, which is parallel to the axis C of the axle shafts 4, 5.

In this embodiment, the torque/velocity selector means 33, which are configured to change the torque/velocity delivered by the electric motors 2a, 2b relative to the one transmitted to the axle shafts 4, 5 through the rest of the mechanical transmission 3, comprise a four-gear gearbox, preferably both a gearbox with cogged wheels that can be selected by means of a selector gear and a gearbox with a planetary gear of the type already described in the embodiments of the preceding figures 7 to 12.

In particular, the planetary gear gearbox comprises a rotating structure 40 housing the differential 15 and a selector shaft 44 of the type described above, to which reference is made for the sake of brevity.

However, in this case, the rotating structure 40
is further configured to carry, in an integral manner, a pair of cogged wheels 16a, 16b, which are different from one another in terms of size/number of teeth and are configured to cooperate, by meshing, with the cogged wheels 11a, 11b carried by the intermediate shaft 12. Similarly to the embodiment of figure 8, the cogged wheels 11a, 11b are carried so that they can freely rotate and have a different size/number of teeth; furthermore, the intermediate shaft 12 is configured to carry a selector gear 34, which is free to slide on the axis A and is configured to selectively cooperate with one of the cogged wheels 11a, 11b in order to make them integral to the rotation of the intermediate shaft 12, as already describe above.

As mentioned above, again, the selector gear, 34 is moved along the axis A by means of known actuator means 35, for example a mechanical actuator comprising a manually operated lever 36. Each one of the cogged wheels 11a, 11b meshes with a respective cogged wheel 16a, 16b, which is carried by the rotating structure 40 of the planetary gear gearbox.

In an embodiment alternative to the fifth embodiment 14, the torque/velocity selector means 33 comprise - again - a gearbox with a planetary gear and a gearbox with cogged wheels and selector; however, the motors 2a, 2b are arranged on opposite sides relative to the plane B and to the axes C.

Hence, the shafts 12a, 13a and the cogged wheels 11a', 11a" are coaxial to an axis A' and the shafts 12b, 13b and the cogged wheels 11a', 11a" are coaxial to an axis A"; consequently, the selector means 33 comprise a selector gearbox for the cogged wheels 11a', 11a" and a second selector gearbox for the wheels 11b', 11b".

The cogged wheels 11a', 11a", 11b' and 11b" cooperate with respective cogged wheels 16a, 16b carried by the rotating structure 40.

The fifth embodiment described above works as follows.

For the sake of brevity and with reference to the operating modes of the third and fourth embodiments already described above, the torque transmitted, in the embodiment of figure 13, by the motors 2a, 2b to the shaft 12 is transmitted by selecting, through the selector 34, which is moved by the actuator means 35, a first gear ratio defined between the wheels 11a and 16a and a second gear ratio defined between the wheels 11b and 16b.

Said torque/velocity is transmitted to the rotating structure 40 and the velocity further transmitted to the differential 15 can by varied, by the latter, based on the coupling of the selector shaft 44 to the framework 8 or to the rotating structure 40, as already described for the fourth embodiment.

In the embodiment of figure 14, the mode of operation is the same as the one of figure 13; the only difference lies in the way in which the torque is transmitted to the rotating structure 40, which is carried out by the two motors 2a, 2b in a way that is similar to the one described with reference to the embodiment of figure 9 and, hence, will not be discussed again for the sake of brevity.

The invention described herein also relates to an axle (not shown) comprising the axle shafts 4, 5 and a traction module 1 carried by the aforesaid axle as described above. In particular, the axle shafts 4, 5 can be provided, at an end of theirs, with a wheel hub, which is configured to fit a rim of the vehicle. Said wheel hub can be configured to define further velocity/torque transmission ratios between axle shaft 4, 5 and rim, in addition to the ones already provided by the traction module 1.

Owing to the above, the advantages of the electric traction module 1 according to the invention are evident.

The traction module 1 comprises, in a limited and defined space, which is delimited by the framework 8, a complete electric traction system for a driving axle of a vehicle.

This makes it possible for manufacturers to eliminate the known mechanical chain extending from the internal combustion engine to the differential/axle shafts and to free a space that can be used to house the batteries needed by the electric motors.

Moreover, the fact that the mechanical transmission 3 is housed in a closed and advantageously lubricated space reduces the wear thereof and the possible contamination from the outside.

Furthermore, the mechanical transmission, as mentioned above, can comprise different elements, such as differential 15, independent axle shafts, gearboxes with classic or planetary cogged wheels or a combination of these elements to define different ratios. In this way, when a small-sized motor is used, great torques can be delivered to the axle shafts 4,5 and the module 1 can be used both for front and rear axles for vehicles of different types and with different weights.

Finally, the electric traction module 1 according to the invention can be subjected to changes and variants, which, though, do not go beyond the scope of protection set forth in the appended claims.

The number and type of electric motors 2, which can obviously also serve as alternators, and the type of mechanical transmission 3 can be different depending on the power to be delivered by the electric traction module 1.

Moreover, the gears shown herein, for the sake of simplicity, are all represented as gears with straight cylindrical teeth; however, it is clear that multiple gears and arrangements of mechanical transmission 3 are possible, provided that they are equivalent to the ones described above.

The actuator means 35 can obviously be of any type, namely electric, hydraulic, pneumatic or mechanical actuators.

Finally, the embodiments described above can be combined with one another, according to the limits of the appended claims.

## Claims

1. An electric traction module (1) for a vehicle, comprising at least an electric motor (2), a first and a second output shaft (4, 5) and a transmission (3) configured to connect said at least one electric motor (2) to at least one of said first and second output shafts (4, 5), said electric traction module (1) further comprising a framework (8) configured to define an internal volume (9) inside of which said electric motor (2), said transmission (3) and at least part of said first and second output shafts (4, 5) are housed, wherein
said module comprises two motors (2a, 2b) both incident to a common shaft (12), said mechanical transmission (3) comprises a differential (15) interposed between said output shafts (4, 5) and said two motors (2a, 2b),
wherein said common shaft (12) is connected to a gear train-holder (18) of said differential (15) by means of a cogged wheel gear, and
wherein said module comprises velocity/torque selector means (33) configured to vary the velocity provided by said common shaft (12) to said differential (15) according to at least two velocity/torque ratios,
wherein said velocity/torque selector means (33) comprise a selector (34) carried by said common shaft (12) and at least a pair of cogged wheels (11a, 11b), carried in a rotatably free manner relative to said common shaft (12) and cooperating with respective at least one cogged wheel (16a, 16b) carried by said gear train-holder (18), said selector (34) being configured to make one of said cogged wheels (11a, 11b) selectively integral with the rotation to said common shaft (12).

2. The traction module according to claim 1, wherein said speed/torque selector means (33) comprise a planetary gear comprising a rotating structure (40) defining a volume (41) inside of which said differential (15) is housed, a planet gear-holder (43) carried by said gear train-holder (18) of said differential (15), a selector shaft (44) and a plurality of rotating planet gears (42) meshing said selector shaft (44) and said rotating structure (40), said planet gears (42) being carried by said planet gear-holder (43), said selector shaft (44) being configured to assume a first position in which it is integral with said framework (8) and a second position in which it is integral with said rotating structure (40).

3. The traction module according to claim 2, wherein said selector shaft (44) is coaxial to one of said axle shafts (4, 5).

4. The traction module according to claim 1 comprising actuator means (35), configured to move said selector (34) for meshing with one between said cogged wheels (11a, 11b).

5. The traction module according to claim 2 or 3, comprising actuator means (35), configured to move said selector shaft (44) for meshing with one between said framework (8) or said rotating structure (40).

6. The traction module according to one of the preceding claims, wherein said electric motors (2a, 2b) are configured to operate as a generator, when a torque/velocity is imparted to one of its input shafts (13) by said transmission (3).

7. A vehicle axle comprising a first and a second axle shaft (4, 5) and an electric traction module (1) according to any one of the preceding claims.

8. The axle according to claim 7, wherein said first and second axle shafts (4, 5) are provided with wheel-hubs configured to support a wheel of said vehicle, said wheel-hubs comprising means for varying the torque/velocity between said axle shaft and said wheel.

## Patentansprüche

1. Elektrisches Traktionsmodul (1) für ein Fahrzeug, umfassend zumindest einen Elektromotor (2), eine erste und eine zweite Ausgangswelle (4, 5) und ein Getriebe (3), ausgebildet zur Verbindung des zumindest einen Elektromotors (2) mit zumindest einer der ersten und zweiten Ausgangswellen (4, 5), welches elektrische Traktionsmodul (1) ferner eine Rahmenstruktur (8) umfasst, ausgebildet zur Begrenzung eines Innenvolumens (9), in welchem der Elektromotor (2), das Getriebe (3) und zumindest ein Teil der ersten und zweiten Ausgangswellen (4, 5) aufgenommen sind,
wobei das Modul zwei Motoren (2a, 2b) umfasst, die beide einer gemeinsamen Welle (12) zugehörig sind, und das mechanische Getriebe (3) ein Differenzial (15) umfasst, das zwischen den Ausgangswellen (4, 5) und den zwei Motoren (2a, 2b) angeordnet ist,
wobei die gemeinsame Welle (12) mit einem Zahnradhalter (18) des Differenzials (15) mittels eines Kammzahnrads verbunden ist, und
wobei das Modul Geschwindigkeits-/Drehmomentauswahlmittel (33) umfasst, ausgebildet zur Veränderung der Geschwindigkeit, die von der gemeinsamen Welle (12) auf das Differenzial (15) übertragen wird, entsprechend zumindest zwei Geschwindigkeits-/Drehmomentverhältnissen,
wobei die Geschwindigkeits-/Drehmomentauswahlmittel (33) eine Auswahleinrichtung (34) umfassen, die von der gemeinsamen Welle (12) getragen wird, und zumindest ein Paar von Kammrädern (11a, 11b), die frei drehbar in Bezug auf die gemeinsame Welle (12) getragen werden und die mit zumindest einem Kammrad (16a, 16b) zusammenwirken, das von dem Zahnradhalter (18) getragen wird, welche Auswahleinrichtung (34) dazu eingerichtet ist, zu bewirken, dass ein ausgewähltes der Kammräder (11a, 11b) einteilig mit der Rotation der gemeinsamen Welle (12) zusammenwirkt.

2. Traktionsmodul gemäß Anspruch 1, bei welchem die Geschwindigkeits-/Drehmomentauswahlmittel (33) ein Planetengetriebe umfassen, umfassend eine Rotationsstruktur (40), die ein Volumen (41) begrenzt, in welchem das Differenzial (15) aufgenommen ist, einen Planetengetriebehalter (43), der von dem Zahnradhalter (18) des Differenzials (15) getragen wird, eine Auswahlwelle (44) und eine Mehrzahl rotierender Planetenzahnräder (42), die die Auswahlwelle (44) und die Rotationsstruktur (40) kämmen, wobei die Planetenzahnräder (42) von dem Planetengetriebehalter (43) getragen werden und die Auswahlwelle (44) dazu ausgebildet ist, eine erste Position einzunehmen, in der sie einteilig mit der Rahmenstruktur (8) ist, und eine zweite Position, in der sie einteilig mit der Rotationsstruktur (40) ist.

3. Traktionsmodul gemäß Anspruch 2, bei welchem die Auswahlwelle (44) koaxial zu einer der Achswellen (4, 5) steht.

4. Traktionsmodul gemäß Anspruch 1, umfassend Betätigungsmittel (35), ausgebildet zur Bewegung der Auswahleinrichtung (34) zum Kämmen mit einem der Kammräder (11a, 11b).

5. Traktionsmodul gemäß Anspruch 2 oder 3, umfassend Betätigungsmittel (35), ausgebildet zur Bewegung der Auswahlwelle (44) zum Kämmen mit der Rahmenstruktur (8) oder der Rotationsstruktur (40).

6. Traktionsmodul gemäß einem der vorhergehenden Ansprüche, bei welchem die Elektromotoren (2a, 2b) dazu ausgebildet sind, als ein Generator zu arbeiten, wenn ein(e) Drehmoment/Geschwindigkeit auf eine ihrer Eingangswellen (13) durch das Getriebe (3) übertragen wird.

7. Fahrzeugachse, umfassend eine erste und eine zweite Achswelle (4,5) und ein elektrisches Traktionsmodul (1) gemäß einem der vorhergehenden Ansprüche.

8. Achse gemäß Anspruch 7, bei welcher die ersten und zweiten Achswellen (4, 5) mit Radnaben versehen sind, ausgebildet zur Lagerung eines Rads des Fahrzeugs, welche Radnaben Mittel zur Veränderung des Drehmoments/der Geschwindigkeit zwischen der Achswelle und dem Rad umfassen.

## Revendications

1. Module de traction électrique (1) pour un véhicule, comprenant au moins un moteur électrique (2), des premier et second arbres de sortie (4, 5) et une transmission (3) configurée pour relier ledit au moins un moteur électrique (2) à au moins l'un desdits premier et second arbres de sortie (4, 5), ledit module de traction électrique (1) comprenant en outre un châssis (8) configuré pour définir un volume interne (9) à l'intérieur duquel ledit moteur électrique (2), ladite transmission (3) et au moins une partie desdits premier et second arbres de sortie (4, 5) sont logés,
dans lequel ledit module comprend deux moteurs (2a, 2b) tous les deux incidents à un arbre commun (12), ladite transmission mécanique (3) comprend un différentiel (15) interposé entre lesdits arbres de sortie (4, 5) et lesdits deux moteurs (2a, 2b),
dans lequel ledit arbre commun (12) est relié à un support de train d'engrenages (18) dudit différentiel (15) au moyen d'un engrenage de roue dentée, et
dans lequel ledit module comprend des moyens de sélecteur de vitesse/couple (33) configurés pour faire varier la vitesse fournie par ledit arbre commun (12) audit différentiel (15) selon au moins deux rapports de vitesse/couple,
dans lequel lesdits moyens de sélecteur de vitesse/couple (33) comprennent un sélecteur (34) porté par ledit arbre commun (12) et au moins une paire de roues dentées (11a, 11b) portées de manière à pouvoir tourner librement par rapport audit arbre commun (12) et coopérant avec au moins une roue dentée (16a, 16b) respective portée par ledit support de train d'engrenages (18), ledit sélecteur (34) étant configuré pour rendre l'une desdites roues dentées (11a, 11b) sélectivement solidaire de la rotation dudit arbre commun (12).

2. Module de traction selon la revendication 1, dans lequel lesdits moyens de sélecteur de vitesse/couple (33) comprennent un engrenage planétaire comprenant une structure rotative (40) définissant un volume (41) à l'intérieur duquel ledit différentiel (15) est logé, un support d'engrenage planétaire (43) porté par ledit support de train d'engrenages (18) dudit différentiel (15), un arbre de sélecteur (44) et une pluralité d'engrenages planétaires (42) rotatifs s'engrenant avec ledit arbre de sélecteur (44) et ladite structure rotative (40), lesdits engrenages planétaires (42) étant portés par ledit support d'engrenage planétaire (43), ledit arbre de sélecteur (44) étant configuré pour prendre une première position à laquelle il est solidaire dudit châssis (8) et une seconde position à laquelle il est solidaire de ladite structure rotative (40).

3. Module de traction selon la revendication 2, dans lequel ledit arbre de sélecteur (44) est coaxial à l'un desdits arbres d'essieu (4, 5).

4. Module de traction selon la revendication 1, comprenant des moyens d'actionneur (35) configurés pour déplacer ledit actionneur (34) pour qu'il s'engrène avec l'une desdites roues dentées (11a, 11b).

5. Module de traction selon la revendication 2 ou 3, comprenant des moyens d'actionneur (35) configurés pour déplacer ledit arbre de sélecteur (44) pour qu'il s'engrène avec l'un parmi ledit châssis (8) et ladite structure rotative (40).

6. Module de traction selon l'une des revendications précédentes, dans lequel lesdits moteurs électriques (2a, 2b) sont configurés pour fonctionner en tant qu'un générateur, lorsqu'un couple/vitesse est appliqué à l'un de ses arbres d'entrée (13) par ladite transmission (3).

7. Essieu de véhicule comprenant des premier et second arbres d'essieu (4, 5) et un module de traction électrique (1) selon l'une quelconque des revendications précédentes.

8. Essieu selon la revendication 7, dans lequel lesdits premier et second arbres d'essieu (4, 5) sont pourvus de moyeux de roue configurés pour supporter une roue dudit véhicule, lesdits moyeux de roue comprenant des moyens pour faire varier le couple/vitesse entre ledit arbre d'essieu et ladite roue.
